# EUROPÄISCHE PATENTSCHRIFT

(11) **EP 0 797 029 B1**
(45) Veröffentlichungstag und Bekanntmachung des Hinweises auf die Patenterteilung: **14.05.2003**
(21) Anmeldenummer: 97103917.7
(22) Anmeldetag: 08.03.1997
(51) Int. Cl.: F16J 15/08

(54) **Verfahren zum Aufbringen einer Überhöhung auf eine Metallage einer Zylinderkopfdichtung und Zylinderkopfdichtung**
Method for applying a raising to a metallic plate of a cylinder head gasket and cylinder head gasket
Procédé pour appliquer une surélévation à une plaque métallique d'un joint de culasse et joint de culasse

(30) Priorität: 21.03.1996 DE 19611092
(43) Veröffentlichungstag der Anmeldung: 24.09.1997
(73) Patentinhaber: Elring Klinger AG, 72581 Dettingen (DE)
(72) Erfinder: Zerfass, Hans-Rainer, Dr., 65232 Taunusstein (DE)
(74) Vertreter: Sparing - Röhl - Henseler Patentanwälte

(56) Entgegenhaltungen:
- EP-A- 0 230 804
- EP-A- 0 590 944
- EP-A- 0 757 195
- DE-A- 3 421 909
- DE-A- 3 543 839
- DE-A- 3 611 285
- DE-C- 19 513 360

## Beschreibung

Die Erfindung betrifft ein Verfahren zum Aufbringen einer Überhöhung auf eine Metallage einer Zylinderkopfdichtung nach dem Oberbegriff des Anspruchs 1 sowie eine Zylinderkopfdichtung nach dem Oberbegriff des Anspruchs 3, wie aus der EP-C-0 230 804 bekannt.

Aus der EP-C-0 230 804 sind ein- oder mehrlagige metallische Zylinderkopfdichtungen für Brennkraftmaschinen bekannt, bei denen zumindest ein elastisches, gesicktes Funktionsblech, das bei mehrlagigen Dichtungen gewöhnlich ein Deckblech darstellt und dann im allgemeinen zusammen mit einem Bördelblech und gegebenenfalls einem Trägerblech verwendet wird, vorgesehen ist. Längs der mindestens einen Brennkammeröffnung der Brennkraftmaschine ist zusätzlich eine Überhöhung am Brennkammerrand vorgesehen, die zugleich einen Federwegbegrenzer zum Schutz der Sicke des Funktionsblechs gegen mechanische Überlastung bildet. Diese Überhöhung wird durch Umbördeln des Bördelblechs entlang des Brennkammerrands oder durch Befestigen mindestens eines entsprechenden Metallrings am Funktions- oder Trägerblech gebildet.

Es ist ferner bekannt, derartige ringförmige Überhöhungen durch Flammspritzen aufzubringen. Dies stellt jedoch an sich schon ein aufwendiges Verfahren dar.

Außerdem ist es bekannt, diese ringförmigen Überhöhungen in Umfangsrichtung in bezug auf ihre Höhen- und Breitenprofilierung zu variieren, um eine Minimierung von Zylinderkopfverzügen und eine Absenkung der Anzugskräfte für die Schrauben, die den Zylinderkopf mit dem Zylinderblock der Brennkraftmaschine verspannen, zu erreichen.

Die zur Verwirklichung einer Variation der Höhen- und Breitenprofilierung der Überhöhungen in Umfangsrichtung notwendigen Maßnahmen sind jedoch aufwendig, zumal hierzu eine mechanische Metallumformung mit sehr geringen Toleranzen notwendig ist.

Aus DE-C-3 930 120 ist eine Zylinderkopfdichtung bekannt, die mindestens drei übereinander geschichtete, ungesickte Metallagen umfaßt, wobei zwischen diesen um die einzelnen Durchtrittsöffnungen herum ringförmige Auflagen aus Weichstoffmaterial angeordnet sind. Dieses Weichstoffmaterial ist elastisch verformbar und dient als Ersatz der hiernach unerwünschten Sicken. Bei diesem Weichstoffmaterial kann es sich um einen im Siebdruckverfahren aufgebrachten polymeren Werkstoff handeln, der durch Faserfüllstoffe (im Rahmen von Weichstoffdichtungsmaterial) genügend druckfest und ferner durch entsprechende Materialwahl, nämlich durch Verwendung eines entsprechenden Kautschuks, genügend temperaturbeständig ist.

Auch gemäß DE-A-4 136 403 werden Weichstoffauflage aus einem Gummi auf einer mehrlagigen Zylinderkopfdichtung ausgebildet, die ebenfalls als Sickenersatz dienen.

Ferner ist es aus DE-A-3 421 909 bekannt, bei einer Weichstoffdichtung deren Verformungsstabilität im Bereich ihrer metallischen Einfassung, die sich am Brennkammerrand befindet, durch einen Polymerauftrag zu verbessern. Hierbei erfolgt die Kraftaufnahme ebenso wie die Aufnahme der thermischen Belastung durch die metallische Einfassung.

Aufgabe der Erfindung ist es, ein Verfahren nach dem Oberbegriff des Anspruchs 1 und eine Zylinderkopfdichtung nach dem Oberbegriff des Anspruchs 3 zu schaffen, die es ermöglichen, Überhöhungen in einfacher Weise anzubringen, selbst wenn diese in Breite und Höhe variieren.

Diese Aufgabe wird entsprechend dem kennzeichnenden Teil des Anspruchs 1 bzw des Anspruchs 3 gelöst.

Durch das Aufbringen von Federwegsbegrenzern für Sicken, die gegen zu starkes Zusammendrücken zu schützen sind, bildenden Überhöhungen durch Siebdruck auf eine oder mehrere Metallagen einer ein- oder mehrlagigen metallischen Zylinderkopfdichtung ergibt sich ein sehr einfaches, kostengünstiges Verfahren zur Ausbildung dieser Überhöhungen, das es ohne weiteres ermöglicht, gleichmäßig dicke und breite als auch in Dicke und Breite variierende Schichten durch entsprechendes Auslegen des zum Siebdruck verwendeten Siebs aufzubringen.

Hierbei bildet der mineralische Füllstoff ein praktisch unelastisches Gerüst für die vom Federwegbegrenzer, der sich im Krafthauptschluß befindet und damit einer sehr hohen Belastung ausgesetzt ist, aufzunehmenden Kräfte, wobei der Duroplast zum einen als Transportmittel beim Siebdruck und zum anderen als Bindemittel oder Matrix zum Zusammenhalten des Gerüsts dient. Der Anteil an Füllstoff im Siebdruckauftrag ist möglichst hoch, wird jedoch durch die Transportfähigkeit der Mischung aus Duroplast und Füllstoff beim Siebdruck begrenzt. Dieses Verhältnis liegt im Bereich von 1:1 bis etwa 1:3, insbesondere bei etwa 1:3.

Überraschenderweise hat sich gezeigt, daß derartige Federwegbegrenzer die bisherigen metallischen Federwegbegrenzer aus Stahl ersetzen können und den starken Belastungen selbst bei hochleistungsfähigen, hochverdichtenden Motoren mit geringem Zylinderabstand standhalten.

Als Kunststoffe kommen entsprechend modifizierte und ausreichend temperaturbeständige Epoxidharze (EP) infrage.

Die thermische Stabilität der Epoxidharze auf der Basis von Bisphenol-A- und/oder Bisphenol-F-diglycidethern wird durch Verwendung von aromatische Ringe enthaltenden Härtern, aus der Gruppe der aromatischen Amine, Anhydride oder Imidazole erhöht, vgl. DE-Z Kunststoffe 80 (1990) Nr. 1, S. 50-53.

Die Druckfestigkeit des Kunststoffs wird durch entsprechende Füllung mit Quarzmehl erhöht vgl. DE-Z Kunststoffe 66 (1976) Nr. 10, S. 637-641. Hierbei wird ein Verhältnis Kunststoff/Füllstoff von 1 bis 3 eingesetzt.

überraschenderweise hat sich gezeigt, daß Zylinderkopfdichtungen mit derartigen Überhöhungen den Belastungen im motorischen Betrieb standhalten.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

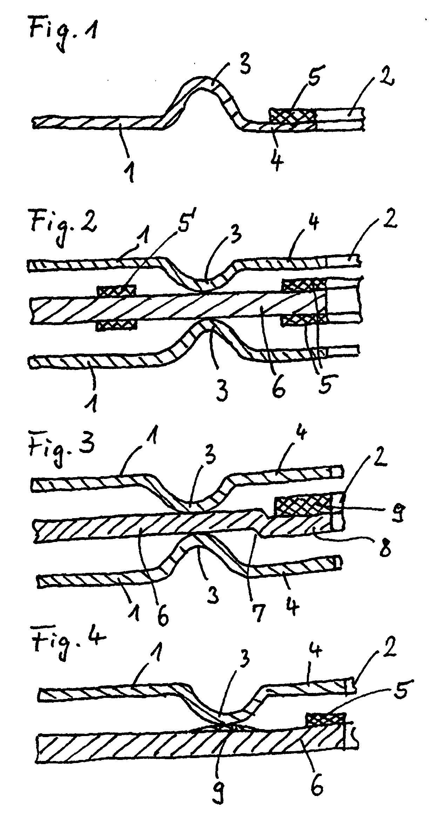

Fig. 1 bis 4 zeigen schematisch und ausschnittweise Schnitte von verschiedenen Ausführungsformen von Zylinderkopfdichtungen.

Die in Fig. 1 dargestellte Zylinderkopfdichtung umfaßt ein Funktionsblech 1, das mit einer oder mehreren Öffnungen 2 entsprechend den Brennkammern der zugehörigen Brennkraftmaschine sowie nicht dargestellten Schraubendurchtrittslöchern für Zylinderkopfschrauben und üblicherweise mit ebenfalls nicht dargestellten Durchtrittsöffnungen für Kühlwasser bzw. Öl versehen ist.

Das gewöhnlich aus Federstahl hergestellte und ansonsten plane Funktionsblech 1 ist mit Sicken 3 versehen, die mit Abstand unter Belassung eines geraden Blechabschnitts 4 im Randbereich der jeweiligen Öffnung 2 angeordnet sind.

Benachbart zum Brennkammerrand ist ein gleichzeitig zur brennraumseitigen Überhöhung der Zylinderkopfdichtung dienender Federwegbegrenzer 5 aus Kunststoff zum Schutz der Sicke 3 gegen übermäßige mechanische Verformung auf derjenigen Seite des Funktionsblechs 1 im Siebdruckverfahren aufgebracht, zu der die Sicke 3 gewölbt ist.

Bei der in Fig. 2 dargestellten Ausführungsform sind zwei Funktionsbleche 1 als Deckbleche mit ihren Sicken 3 spiegelsymmetrisch zueinander und einander zugekehrt vorgesehen, wobei zwischen den Funktionsblechen 1 ein planes Trägerblech 6 angeordnet ist. Das Trägerblech 6 ist benachbart zum jeweiligen Brennkammerrand beidseitig mit jeweils einem im Siebdruckverfahren aufgebrachten Federwegbegrenzer 5 aus Kunststoff versehen, um die beiden Sicken 3 der beiden Funktionsbleche zu schützen und die brennkammerseitige Überhöhung zu bewirken. Die Federwegbegrenzer 5 sind hierbei symmetrisch zur Mittel- oder Symmetrieebene der Zylinderkopfdichtung angeordnet.

Zusätzlich können auch radial außenseitig der jeweiligen Sicke 3 zusätzliche Federwegbegrenzer 5' vorgesehen sein, die ebenfalls aus Kunststoff bestehen und gleichzeitig mit den radial innenseitigen Federwegbegrenzern 5 im Siebdruckverfahren aufgebracht sind.

Anstelle des Aufbringens der Federwegbegrenzer 5 am Trägerblech 6 können auch zwei Funktionsbleche 1 mit Federwegbegrenzern 5 gemäß Fig. 1 verwendet werden.

Eines der Funktionsbleche 1 und die diesem zugewandten Federwegbegrenzer 5, 5' können auch bei der Ausführungsform von Fig. 2 fehlen.

Wie in Fig. 3 dargestellt, kann das Trägerblech 6 jeweils mit einer um die jeweilige Öffnung 2 umlaufenden Kröpfung 7 versehen sein, in deren Bereich ein im Siebdruckverfahren hergestellter, ringförmiger Kunststoffauftrag 9 so aufgebracht ist, daß der abgekröpfte Bereich 8 des Trägerblechs 6 und der Kunststoffauftrag 9 vorzugsweise im wesentlichen mittig zwischen den beiden Funktionsblechen 1 angeordnet sind. Hierbei wird der Federwegbegrenzer durch den Kunststoff auftrag 9 und den abgekröpften Bereich 8 des Trägerblechs 6 gebildet.

Bei der in Fig. 4 dargestellten, hier zweilagig ausgeführten Ausführungsform ist zusätzlich vorgesehen, den Aufstandsbereich der Sikke 3 auf dem Trägerblech 6 in Umfangsrichtung zu ändern, zu welchem Zweck eine Überhöhung 9 in Form eines durch Siebdruck aufgebrachten Kunststoffauftrags auf dem Trägerblech 6 mit in Umfangsrichtung variierender Stärke im Aufstandsbereich der Sicke 3 vorgesehen ist.

## Patentansprüche

1. Verfahren zum Aufbringen einer Überhöhung auf eine Metallage einer metallischen Zylinderkopfdichtung für eine Brennkraftmaschine mit mindestens einem Funktionsblech (1), das mit einer Öffnung (2) oder mehreren nebeneinahder angeordneten Öffnungen (2) entsprechend den Brennkammern der Brennkraftmaschine versehen ist, wobei in dem mindestens einen Funktionsblech (1) um jede Öffnung (2) herum mit Abstand zu dieser unter Belassung eines geraden Blechabschnitts (4) im Öffnungsrandbereich eins Sicke (3) vorgesehen ist, für die ein koaxial zur Sicke (3) verlaufender, durch die Überhöhung gebildeter Federwegbegrenzer (5; 5'; 8, 9) vorgesehen ist, **dadurch gekennzeichnet, daß** die Überhöhung (5; 5', 9) aus einem Epoxidharz mit einem aromatischen Amin, Anhydrid oder Imidazol als Härter durch Siebdrucken hergestellt wird, wobei das Epoxidharz mit Quarzmehl im Verhältnis 1:1 bis 1:3 gefüllt ist.

2. Verfahren nach Anspruch 1, **dadurch gekennzeichnet, daß** ein Epoxidharz auf der Basis von Bisphenol-A- und/oder Bisphenol-F-diglycidethern verwendet wird.

3. Metallische Zylinderkopfdichtung für eine Brennkraftmaschine mit mindestens einem Funktionsblech (1), das mit einer Öffnung (2) oder mehreren nebeneinander angeordneten Öffnungen (2) entsprechend den Brennkammern der Brennkraftmaschine versehen ist, wobei in dem mindestens einen Funktionsblech (1) um jede Öffnung (2) herum mit Abstand zu dieser unter Belassung eines geraden Blechabschnitts (4) im Öffnungsrandbereich eine Sicke (3) vorgesehen ist, für die ein koaxial zur Sicke (3) verlaufender Federwegbegrenzer (5; 5'; 8, 9) vorgesehen ist, wobei eins oder mehrere überhöhungen vorgesehen sind, **dadurch gekennzeichnet, daß** die mindestens eine Überhöhung (5; 5'; 9) aus einem durch Siebdruck aufgebrachten Epoxidharz mit einem aromatischen Amin, Anhydrid oder Imidazol als Härter besteht, wobei das Epoxidharz mit Quarzmehl im Verhältnis 1:1 bis 1:3 gefüllt ist.

4. Zylinderkopfdichtung nach Anspruch 3, **dadurch gekennzeichnet, daß** das Epoxidharz auf der Basis von Bisphenol-A- und/oder Bisphenol-F-diglycidethern ist.

## Claims

1. A method of applying a raising onto a metal layer of a metallic cylinder head gasket for an internal combustion engine with at least one functional plate (1) with one opening (2) or several openings (2) arranged adjacent to each other to match the combustion chambers of the internal combustion engine, whereby a bead (3) is formed in at least one functional metal plate (1) around each opening (2) at a distance to it while leaving a flat plate section (4) in the area of the opening, a spring stroke limiter (5; 5'; 8, 9) formed by the raising and running coaxially to the bead (3) being provided for the said bead (3), **characterised in that** the raising (5; 5', 9) is made of epoxy resin applied by screen printing, with aromatic amine, anhydride or imidazole as the hardener, whereby the epoxy resin is filled with quartz powder in a ratio of 1:1 to 1:3.

2. The method according to claim 1, **characterised in that** an epoxy resin based on bisphenol-A-diglycide ethers and/or bisphenol-F-diglycide ethers is used.

3. A metallic cylinder head gasket for an internal combustion engine with at least one functional metal plate (1) provided with one opening (2) or several openings (2) arranged adjacent to each other to match the combustion chambers of the internal combustion engine, whereby a bead (3) is formed in at least one functional metal plate (1) around each opening (2) at a distance to it while leaving a flat plate section (4) in the area of the opening, a spring stroke limiter (5; 5'; 8, 9) running coaxially to the said bead (3) is provided, whereby one or more raisings are provided, **characterised in that** at least one raising (5; 5'; 9) is made of epoxy resin applied by screen printing, with aromatic amine anhydride or imidazole as the hardener, whereby the epoxy resin is filled with quartz powder in a ratio of between 1:1 to 1:3.

4. The cylinder head gasket according to claim 3, **characterised in that** the epoxy resin is on the basis of bisphenol-A-diglycide ethers and/or bisphenol-F-diglycide ethers.

## Revendications

1. Procédé pour rapporter une surépaisseur sur une couche métallique d'un joint de culasse métallique pour un moteur à combustion interne, comprenant au moins une tôle de fonction (1) qui est munie d'une ouverture (2) ou de plusieurs ouvertures (2) disposées les unes à côté des autres pour correspondre aux chambres de combustion du moteur à combustion interne, et dans lequel une nervure (3) est prévue dans la tôle de fonction (1), sur le pourtour de chaque ouverture (2), à distance de celle-ci, en laissant un segment de tôle droit (4) dans la région du bord de l'ouverture, nervure pour laquelle est prévu un limiteur de course élastique (5 ; 5' ; 8, 9) qui s'étend coaxialement à la nervure (3) et est formé par la surépaisseur, **caractérisé en ce que** la surépaisseur (5 ; 5', 9) est formée par sérigraphie en une résine époxyde contenant une amine aromatique, un anhydride ou un imidazol comme durcisseur, la résine époxyde étant chargée de poudre de quartz dans le rapport de 1:1 à 1:3.

2. Procédé selon la revendication 1, **caractérisé en ce qu'**on y utilise une résine époxyde à base de bisphénol-A et/ou bisphénol-F-diglycidéthers.

3. Joint de culasse métallique pour un moteur à combustion interne comprenant au moins une tôle de fonction (1) qui est munie d'une ouverture (2) ou de plusieurs ouvertures (2) disposées les unes à côté des autres pour correspondre aux chambres de combustion du moteur à combustion interne, dans lequel une nervure (3) est prévue dans la tôle de fonction (1), sur le pourtour de chaque ouverture (2), à distance de celle-ci, en laissant un segment de tôle droit (4) dans la région du bord de l'ouverture, nervure pour laquelle est prévu un limiteur de course élastique (5 ; 5' ; 8, 9) qui s'étend coaxialement à la nervure (3) et dans lequel il est prévu une ou plusieurs surépaisseurs, **caractérisé en ce que** la surépaisseur (5 ; 5', 9) est formée par sérigraphie en une résine époxyde contenant une amine aromatique, un anhydride ou un imidazol comme durcisseur, la résine époxyde étant chargée de poudre de quartz dans le rapport de 1:1 à 1:3.

4. Joint de culasse selon la revendication 3, **caractérisé en ce que** la résine époxyde est à base de bisphénol-A et/ou bisphénol-F-diglycidéthers.
